# FASCICULE DE BREVET EUROPEEN

(11) **EP 3 259 326 B1**
(45) Date de publication et mention de la délivrance du brevet: **18.12.2019**
(21) Numéro de dépôt: 16707876.5
(22) Date de dépôt: 08.02.2016
(51) Int. Cl.: C09J 111/00

(54) **COLLE CONTACT DE POLYCHLOROPRENE A BASE AQUEUSE**
WÄSSRIGER POLYCHLOROPREN KONTAKTKLEBER
AQUEOUS POLYCHLOROPRENE CONTACT ADHESIVE

(30) Priorité: 17.02.2015 FR 1551292
(43) Date de publication de la demande: 27.12.2017
(73) Titulaire: Bostik SA, 92700 Colombes (FR)
(72) Inventeur: CASIMIRO, Jessie, 77170 Brie Comte Robert (FR); NATAF, Mélanie, 93230 Romainville (FR)
(74) Mandataire: Chahine, Audrey Claire
(86) Numéro de dépôt international: PCT/FR2016/050264
(87) Numéro de publication internationale: WO 2016/132039

(56) Documents cités:
- EP-A1- 0 083 218
- WO-A2-2008/067365
- DE-A1- 19 924 749

## Description

La présente invention concerne une composition adhésive à base aqueuse comprenant un mélange de polychloroprènes, au moins un agent autoréticulable de type alkyde et au moins une charge, l'utilisation d'une telle composition comme colle contact afin d'assembler deux matériaux, ainsi qu'une structure multicouches assemblée à l'aide d'une composition adhésive selon l'invention.

On désigne habituellement par colle contact, une composition adhésive capable d'assembler par collage deux matériaux à l'issue d'un procédé de mise en œuvre particulier.

Contrairement à une colle de fixation, une colle contact est appliquée par double encollage, c'est-à-dire que la composition est appliquée sur chacune des surfaces des deux matériaux à assembler, puis laissée sécher pendant un certain temps (désigné temps de séchage) nécessaire à la formation de films adhésifs secs au toucher, avant assemblage des matériaux par pressage desdits films adhésifs l'un contre l'autre. Ce temps de séchage doit en outre être inférieur au temps ouvert de la colle, c'est-à-dire au temps après lequel la colle perd ses propriétés de collage et ne peut plus lier les matériaux à assembler.

On distingue généralement deux types de colles contact : les colles contact à base solvantée dont le milieu est constitué essentiellement de(s) solvant(s) organique(s) volatil(s), et les colles contact à base aqueuse dont le milieu est constitué essentiellement d'eau.

Les colles contact à base solvantée sont actuellement employées dans divers secteurs d'activités, comme l'industrie ou le domaine du bâtiment, en raison de leurs nombreux avantages.

Ces colles sont par exemple utilisées pour le collage de chaussure et de contre-plaqué (meubles), pour le collage des nez de marche en polychlorure de vinyle (PVC) ou textile, des remontées en plinthe, des dalles plastiques sur bétons, enduits de lissage, plâtre ou plaque de plâtre, des stratifiés décoratifs sur bois ou panneaux de particules, des mousses plastiques isolantes sur fibrociment, béton, métaux, ou encore pour le collage des revêtements en caoutchouc.

La majorité des colles contact solvantée sont formulées à base de polychloroprène (néoprène). Elles présentent de nombreux avantages :
- un temps de séchage court, favorisé par l'évaporation rapide des solvants organiques volatils, conduisant à un gain de temps important dans la mise en application de la colle, en réduisant le temps d'attente entre la pose de la colle et la mise en contact des pièces à assembler,
- une prise immédiate de la colle après séchage, se traduisant par une montée en cohésion élevée et rapide de la colle, permettant ainsi de lier les deux matériaux, par simple pressage,
- une adhérence sur des matériaux très variés (acier, produits de ragréage...),
- un temps de travail long, correspondant au délai maximum à respecter entre la fin du temps de séchage et la mise en contact des pièces à coller, afin de garantir un collage avec des performances adhésives optimum.

Un temps de travail long est particulièrement avantageux, par exemple pour des applications manuelles, des collages de grandes pièces ou de pièces compliquées pour lesquels l'étape d'enduction est souvent longue. En effet, dans de tels cas, l'opérateur doit pouvoir disposer d'un temps suffisant pour enduire puis mettre en contact les pièces enduites. Lorsque la colle présente un temps de travail insuffisant, la mise en contact des pièces enduites ne permet pas de former un assemblage collé présentant une bonne résistance mécanique.

Un temps de travail long permet en outre à l'opérateur d'enduire en série plusieurs pièces avant de les assembler. Il permet aussi à l'opérateur d'encoller les matériaux à joindre à des moments différents, par exemple encoller un matériau la veille puis l'autre le lendemain sans risque de perte des propriétés de collage.

Le gain de temps et la flexibilité dans la mise en œuvre de ces colles représentent des avantages concurrentiels non négligeables dans de nombreux domaines d'application.

Toutefois, l'un des inconvénients majeurs de ces colles contact est leur teneur élevée en solvant organique volatil, pouvant aller jusqu'à 60% en poids du poids de la colle. Ceci est problématique compte tenu de l'inflammabilité de ces solvants et de l'exposition récurrente des opérateurs à ces produits.

De plus, ces compositions peuvent poser des problèmes sur certains types de support tel que des mousses de polystyrène (PS) ou du PVC. En effet, en raison de la présence dudit solvant, des problèmes de dégradation du PS ou de jaunissement du PVC peuvent être observés.

Pour pallier ces problèmes, des compositions adhésives à base aqueuse ont été développées.

Toutefois, les colles contact à base aqueuse développées ne permettent pas d'obtenir des performances comparables aux colles contact à base solvantée, notamment en terme de rapidité de séchage et de montée en cohésion.

En particulier, l'écart de performance entre ces deux types de colle peut être accru selon les conditions de mise en œuvre de la colle. Par exemple, le temps de séchage de la colle aqueuse est allongé :
- lorsque la colle est séchée à basse température (par exemple de 10 à 25°C) ou dans un environnement humide (par exemple à une humidité relative supérieure ou égale à 50 %), et/ou
- lorsque le volume de colle appliqué est important. En effet, le séchage de la colle est allongé avec l'augmentation de l'épaisseur de la couche de colle appliquée, rendant l'évaporation d'eau plus difficile.

Or dans de nombreuses applications, notamment dans l'industrie du bois ou du bâtiment, pour lesquelles on cherche à obtenir un collage efficace (résistant aux contraintes mécaniques), la colle est souvent appliquée à raison d'au moins 150 grammes par mètre carré (g/m²) et plus préférentiellement au moins 200g/m², sur chacune des surfaces des matériaux, conduisant au dépôt d'une couche de colle épaisse sur chaque surface des matériaux.

Par ailleurs, les surfaces enduites sont ensuite généralement séchées à l'air libre jusqu'à formation de films adhésifs secs au toucher, avant d'être assemblées par pressage.

De fait, dans ces conditions, le temps de séchage de la colle est particulièrement long et présente l'inconvénient de dépendre des aléas climatiques du milieu environnant.

Dans de tels cas, le retard au séchage et la faible montée en cohésion de la colle aqueuse par rapport à la colle solvantée sont particulièrement gênants et conduisent bien souvent l'utilisateur à préférer l'emploi d'une colle contact solvantée.

Afin de combler les écarts de performances observées entre les colles contact solvantées et les colles contact aqueuses, en terme de rapidité de séchage et de montée en cohésion, il a été développé des compositions bicomposantes comprenant de manière séparée, d'une part, une composition adhésive aqueuse à base de polychloroprène ayant une teneur en solide élevée, et d'autre part, un coagulant « dit externe » à base d'acide (citrique, lactique ou acétique) ou de sels (ZnSO₄). Les deux composants de la composition bicomposante sont stockés séparément et mélangés au dernier moment avant emploi pour provoquer une prise rapide de la composition adhésive.

Toutefois, l'utilisation d'une composition bicomposante n'est pas souhaitée car la production d'une telle composition est complexe et coûteuse. En effet, l'utilisation d'une telle composition nécessite la mise en œuvre d'un conditionnement sophistiqué dans lequel les composants réactifs ne doivent pas entrer en contact avant emploi et doivent pouvoir être mélangés rapidement au moment de l'emploi. En pratique, de nombreux dispositifs sont pressurisés afin d'obtenir un mélange et/ou une application rapide de la composition. Cependant, ces dispositifs sont inadéquats lorsqu'on souhaite stocker et utiliser de gros volume de colles.

De plus, le temps de travail de ces produits est faible.

L'utilisation d'une composition bicomposante requiert par ailleurs un entretien régulier et nécessite de prêter une attention particulière quant au ratio de mélange utilisé entre les deux composants. Sans cela, le mélange risque de ne pas présenter les propriétés et performances souhaitées.

Ainsi, on recherche une colle contact à base aqueuse présentant des performances comparables à une colle contact à base solvantée et suffisamment stable pour pouvoir être stockée sous la forme d'une composition monocomposante.

Par ailleurs, on recherche une colle contact à base aqueuse capable de conduire à un joint adhésif résistant à des températures élevées. En effet, dans de nombreuses applications, l'assemblage collé obtenu peut être amené à être soumis ultérieurement à un ou plusieurs procédés de transformation susceptibles d'induire, par exemple par friction, des échauffements localisés au niveau de la zone de collage, comme lors d'une étape de sciage ou de perçage de l'assemblage collé.

Dans la demande de brevet WO 01/10968, il est divulgué une composition adhésive monocomposante, comprenant un polychloroprène, une résine choisie parmi les copolymères d'éthylène et vinyl acétate, les homo- et copolymères de polyvinylacétate, les copolymères d'acide acrylique, et les copolymères d'acide acrylique et de polyvinyl acétate, et un coagulant « dit interne » qui est un sel hygroscopique éventuellement en mélange avec un aminoacide. Ce coagulant interne est capable d'induire un séchage et une prise rapide de la composition adhésive lors de sa mise en œuvre, sans provoquer toutefois la déstabilisation de la composition adhésive. L'exemple 15 de cette demande enseigne par ailleurs l'importance d'utiliser une résine telle que décrite précédemment qui ne soit pas autoréticulable pour éviter des problèmes de stabilité de la composition adhésive.

Toutefois, les compositions adhésives monocomposantes de l'art antérieur sus-citées restent encore à améliorer sur un certain nombre d'aspect, notamment au niveau de la rapidité de séchage, de la stabilité au stockage, de la montée en cohésion, du maintien (initial ou final) de l'assemblage collé, et/ou résistance thermique du joint adhésif.

De manière surprenante, il a été découvert qu'en associant dans certaines proportions des polychloroprènes particuliers avec une résine autoréticulable de type alkyde et des charges, en présence d'eau et d'un système stabilisant, on pouvait obtenir une colle contact à base aqueuse présentant une ou plusieurs des améliorations sus-citées par rapport à la composition adhésive de l'art antérieur.

La composition adhésive selon l'invention présente une excellente montée en cohésion, permettant d'obtenir rapidement un assemblage collé présentant des propriétés mécaniques satisfaisantes. Divers tests peuvent été effectués pour mettre en évidence cet avantage, tel que le suivi dans le temps de la résistance au cisaillement ou de la résistance au pelage de l'assemblage collé.

Les propriétés mécaniques de l'assemblage collée peuvent également être testées en évaluant qualitativement le maintien de l'assemblage peu après la mise en contact des surfaces encollées. On parle de maintien initial lorsque la résistance de l'assemblage est évaluée à un temps t0 allant de 2 secondes à moins de 2 heures après collage des matériaux. On parle de maintien final lorsque la résistance de l'assemblage est évaluée 7 jours après collage des matériaux ou au-delà.

La composition adhésive selon l'invention est stable, malgré une teneur élevée en charges et la présence d'une résine autoréticulable. En particulier, la composition adhésive selon l'invention peut être utilisée et appliquée aisément même après avoir été stockée un ou plusieurs mois, et jusqu'à 12 mois à compter de sa préparation. En effet, la viscosité de la composition n'évolue pas ou quasiment pas au cours du temps.

En particulier, il a été observé que la composition adhésive selon l'invention peut être appliquée sur différents type de matériaux, en grandes quantités (à raison de 150 à 350 grammes de colle par mètre carré de chacune des surfaces de matériaux à assembler, et de préférence à raison de 200 à 300 g/m² de colle sur chacune des surfaces de matériaux à assembler) tout en présentant un temps de séchage faible par rapport aux colles contact à base aqueuse chargées du commerce.

Plus particulièrement, il a été observé que la composition adhésive selon l'invention appliquée sur du bois stratifié avec un grammage supérieur ou égal à 150 g/m², et de préférence supérieur ou égal à 200 g/m², sur les deux surfaces à encoller, et exposées à une température de séchage de 20°C et une humidité relative d'au moins 50% présentait un temps de séchage inférieur ou égale à 45 minutes.

En particulier, il a été observé que la composition adhésive selon l'invention permet de coller divers type de matériaux, incluant même les supports non absorbants, peu poreux ou non-poreux, habituellement difficiles à coller, tel que l'aluminium, le PVC ou le polyméthacrylate de méthyle (PMMA), avec un maintien initial élevé.

En outre, il a été observé que la composition adhésive selon l'invention permettait d'obtenir des performances de collage (montée en cohésion, maintien) comparables voire meilleures comparativement à certaines colles contact à base aqueuse du marché, sur divers matériaux rigides, tels que le bois et ses formes dérivés (stratifié, aggloméré, contreplaqué) ou le PVC rigide. La même observation a été faite sur divers matériaux non rigides, et en particulier sur du PVC souple.

En particulier, il a été observé que la colle de l'invention permettait de former des assemblages de matériaux rigides présentant une résistance mécanique au cisaillement supérieure ou égale à 30 kg/cm².

Il a été observé en outre que la composition adhésive selon l'invention permettait d'obtenir un collage résistant à des températures élevées pouvant aller jusqu'à 140°C.

La composition adhésive selon l'invention présente en outre l'avantage de pouvoir être stockée sous la forme d'une composition monocomposante, et plus particulièrement être conditionnée en quantité importante dans un dispositif à compartiment unique non pressurisé.

Ainsi, l'objet de la présente demande porte sur une composition adhésive comprenant :
A) de 5 à 40 % en poids sec d'un mélange de polychloroprènes dispersés dans l'eau comprenant :
   A1) au moins un polychloroprène présentant une dureté supérieure ou égale à 80 shore A, et
   A2) au moins un polychloroprène présentant une dureté inférieure ou égale à 60 shore A,
B) de 0,5 à 25% en poids sec d'au moins un agent autoréticulable de type alkyde,
C) de 10 à 40% en poids sec d'au moins une charge minérale,
D) de 0,05 à 3% en poids sec d'au moins un émulsifiant,
E) de l'eau.

La présente demande a également pour objet l'utilisation d'une telle composition comme colle contact, notamment pour le collage d'un premier matériau sur un second matériau, tel que par exemple le collage d'un revêtement de sol sur un produit de ragréage.

La présente demande porte également sur une structure multicouches comprenant au moins deux couches de matériaux, identiques ou différents, liées entre elles par une couche de composition adhésive selon l'invention.

D'autres objets et caractéristiques ou avantages de la présente invention apparaitront plus clairement à la lecture de la description et des exemples.

Dans la présente demande, en l'absence d'indication contraire :
- La dureté des polychloroprènes est mesurée à l'aide d'un duromètre de type A, en choisissant l'échelle appropriée (type AO ou D), sur un échantillon de polychloroprène de 6 mm d'épaisseur préalablement chauffé à 100°C puis refroidi rapidement à -5°C (trempe), ladite mesure étant réalisée 100 heures après la fin du refroidissement à -5°C.

L'échantillon testé peut être obtenu à partir du polychloroprène sous forme de dispersion aqueuse, par application de couches successives de ladite dispersion que l'on laisse sécher et durcir entre chaque application.

L'échantillon est ensuite chauffé à 100°C pendant une heure environ afin de s'assurer que l'ensemble de l'échantillon soit porté à cette température.

Puis celui-ci est refroidi rapidement à -5°C, jusqu'au temps pour lequel on réalise la mesure de dureté. La dureté est exprimée en shore A.

Sauf indication contraire dans la présente demande, on pourra se référer à la norme NF ISO 7619-1 concernant la méthode de mesure de dureté des polychloroprènes.
- La taille des particules (charge) est déterminée selon la Norme NF ISO 13320-1 (1999) par diffraction laser sur un appareil de type MALVERN.
- La mesure de viscosité est réalisée à 23°C à l'aide d'un viscosimètre Brookfield RVT, avec une aiguille numéro 7 à une vitesse de rotation de 10 tours par minute (tr/mn). La valeur mesurée est exprimée en millipascal seconde (mPa.s).
- La teneur en phase minéralogique est déterminée à partir d'une analyse de diffraction aux rayons X selon la méthode de Rietvelt.
- On qualifie par cyclique un composé dont la structure forme un cycle hydrocarboné ou un hétérocycle, ou comporte dans sa structure un ou plusieurs cycles hydrocarbonés ou hétérocycles, pouvant être aromatique ou aliphatique, et comportant de préférence de 5 à 6 chainons, tel que phényle ;
- On qualifie par acyclique un composé dont la structure ne forme par un cycle hydrocarboné ou un hétérocycle et ne comporte pas dans sa structure un ou plusieurs cycles hydrocarbonés ou hétérocycles.

### A) Mélange de polychloroprènes

Par « polychloroprène » au sens de la présente demande, on entend un homopolymère du chloroprène, issu de la polymérisation du monomère chloroprène (2-chloro-1,3-butadiène).

De préférence, le mélange de polychloroprènes A) comprend :
A1) au moins un polychloroprène en dispersion aqueuse présentant une dureté supérieure ou égale à 85 shore A, et plus préférentiellement supérieure ou égale à 90 shore A.

De préférence, le mélange de polychloroprènes A) comprend :
A2) au moins un polychloroprène en dispersion aqueuse présentant une dureté inférieure ou égale à 55 shore A, et plus préférentiellement inférieure ou égale à 50 shore A.

Les polychloroprènes A1) et A2) utilisables selon l'invention peuvent être préparés de manière conventionnelle par l'homme du métier. En particulier, ces polymères peuvent être obtenus directement sous forme de dispersions aqueuses de polychloroprènes par polymérisation en émulsion de chloroprène, dans un milieu réactionnel alcalin. On préfère ajouter les polychloroprènes A1) et A2) dans la composition adhésive de l'invention sous forme de dispersions aqueuses de polychloroprènes présentant une teneur en matière sèche allant de 50 à 60 % en poids du poids total de ladite dispersion aqueuse.

De telles dispersions sont disponibles dans le commerce.

Parmi les dispersions aqueuses de polychloroprènes utilisables, on préfère utiliser :
- le produit commercialisé sous la dénomination Dispercoll C84 par la société Bayer, qui correspond à une dispersion aqueuse de polychloroprène possédant une dureté supérieure ou égale à 90 shore A et dont la teneur en matière sèche est égale à 55% en poids environ du poids du produit commercial,
- le produit commercialisé sous la dénomination Dispercoll C VP LS2325/1 par la société Bayer, qui correspond à une dispersion aqueuse de polychloroprène possédant une dureté inférieure ou égale à 45 shore A et dont la teneur en matière sèche est égale à 55% en poids environ du poids du produit commercial.

La composition adhésive selon l'invention comprend de préférence de 7 à 35% en poids sec d'un mélange de polychloroprène(s) A1) et A2) tels que définis précédemment, par rapport au poids de la composition adhésive.

La teneur totale en polychloroprène(s) A1) présente(s) dans la composition adhésive selon l'invention va de préférence de 4 à 25% en poids sec, plus préférentiellement de 5 à 20 % en poids sec, et mieux encore de 8 à 14% en poids sec, du poids de la composition adhésive.

La teneur totale en polychloroprène(s) A2) présente(s) dans la composition adhésive selon l'invention va de préférence de 1 à 15% en poids sec, plus préférentiellement de 2 à 15 % en poids sec, et mieux encore de 4 à 11% en poids sec du poids de la composition adhésive.

### B) Agent autoréticulable de type alkyde

La composition adhésive selon l'invention comprend au moins agent autoréticulable à base de résines alkydes.

Par autoréticulable, on entend que l'agent est susceptible de réticuler sur lui-même dans les conditions d'application de la composition adhésive. Un tel agent possède au moins deux résines alkydes comprenant chacune au moins un groupe fonctionnel, différent l'un de l'autre et susceptible de réagir ensemble pour conduire à la réticulation de la composition adhésive au moment de l'emploi.

On peut utiliser notamment un agent autoréticulable tel que décrit dans la demande de brevet FR 2973383.

L'agent autoréticulable utilisable selon l'invention est de préférence constitué de:
(i) au moins une résine alkyde comportant au moins une fonction cyclocarbonate à 5 chainons (Y) et
(ii) au moins une résine alkyde comportant au moins une fonction amine primaire (X) salifiée par un acide faible volatil.

L'utilisation d'une fonction amine primaire (X) sous forme de sel d'acide permet de protéger celle-ci de la fonction cyclocarbonate avec laquelle elle est susceptible de réagir, jusqu'au moment de l'emploi de la composition adhésive.

Lors de l'application de la composition adhésive et de son séchage (généralement à l'air libre, à une température allant de 10 à 25°C), l'acide faible volatil et de l'eau vont s'évaporer et provoquer un déplacement des équilibres chimiques qui en déprotégeant la fonction amine primaire, va initier la réticulation de l'agent autoréticulable par réaction de la fonction déprotégée avec la fonction (Y).

La réaction des fonctions (X) et (Y) permet de former une liaison hydroxyuréthane entre les chaines des résines alkyde et de créer à terme un réseau de chaines réticulées.

L'acide faible volatil présente de préférence une chaine carbonée comportant de 1 à 6 atomes de carbone de sorte que l'évaporation soit aisée à basse température (10-25°C).

On entend par acide faible, un acide ayant un pKa allant de 1 à 14, et plus précisément de 3 à 9.

De préférence, l'acide faible volatil est choisi parmi l'acide carbonique, l'acide formique ou l'acide acétique.

Par résine alkyde, on désigne un polyester obtenu par polycondensation entre au moins un polyol et au moins un polyacide, et modifiée par des huiles ou acides gras et/ou des acides non gras.

La résine alkyde peut également être modifiée par d'autres polymères tels que des polyuréthanes, silicones, des polymères vinyliques, des polyamides ou des polyacryliques.

Les résines alkydes (i) et (ii) sont de préférence des polyesters obtenus par polycondensation entre au moins un polyol et au moins un polyacide, et modifiées par des huiles ou acides gras et/ou des acides non gras.

Par huile, on entend une huile d'acide gras, à savoir un corps gras liquide à température ambiante et comprenant des acides gras. On peut utiliser par exemple une huile d'origine végétale.

Par acide gras, on entend un acide comprenant une chaine hydrocarbonée comportant de 8 à 32 atomes de carbone, préférentiellement de 14 à 22 atomes de carbone.

Par acide non gras, on entend un acide comprenant une chaine hydrocarbonée comportant de 1 à 7 atomes de carbone, préférentiellement de 2 à 6 atomes de carbone.

Les acides gras ou non gras sont de préférence des mono acides.

En général, on utilise des acides gras ou non gras carboxyliques.

Les polyols utilisables pour la préparation des résines alkydes (i) et (ii) comprennent au moins deux fonctions hydroxyle et sont de préférence choisis parmi les polyols suivants et leurs mélanges: butane-1,3-diol, diéthylène glycol, dipentaérythritol, dipropylène glycol, éthylène glycol, glycérol, hexane diol, neopentyl glycol, pentaérythritol, pentane diol, polyéthylène glycol, polypropylène glycol (de poids moléculaire allant de 300 à 6000), propane-1,3-diol, propylène glycol, sorbitol, triéthylène glycol, triméthylolpropane, triméthyloléthane, xylose.

Les polyacides utilisables pour la préparation des résines alkydes (i) et (ii) comprennent au moins deux fonctions acide, sous forme acide carboxylique ou anhydride, et sont de préférence choisis parmi les polyacides suivants et leurs mélanges: acide citrique, acide isophtalique, acide téréphtalique, anhydride phtalique, en position para, méta ou ortho, anhydride pyromellitique, anhydride trimellitique, acides ou anhydrides adipique, azélaïque, diglycolique, fumarique, maléique, oxalique, succinique, sébacique.

Les acides gras ou non gras utilisables pour la préparation des résines alkydes (i) et (ii) sont de préférence des monoacides pouvant porter d'autres groupements comme hydroxyle et amine, choisis de préférence parmi les monoacides suivants et leurs mélanges: acide abiétique, acide benzoïque, acide para-terbutyl benzoïque, acide méthylbenzoïque, acide butanoïque, acide caproïque, acide caprylique, acide caprique, acide crotonique, acide éthyl-2 hexanoïque, acide lactique, lysine, acide pentanoïque, acide propionique.

Les acides gras utilisables pour la préparation des résines alkydes (i) et (ii) peuvent être des acides gras insaturés, conjugués ou non, choisis de préférence parmi : l'acide linoléique, l'acide linolénique, l'acide alpha éléostéarique, l'acide alpha licanique, les acides gras de coco, de coton, de lin, les acides gras linoléique, linolénique, oléique, pinolénique, pélargonique, les acides gras de ricin, de ricin déshydraté, de soja, de tallöl, de tournesol.

Les huiles utilisables pour la préparation des résines alkydes (i) et (ii) peuvent être choisies parmi les huiles d'origine végétale suivantes et leurs mélanges : huiles de carthame, de coco, de coton, de lin, de pépins de raisin, d'oïticica, d'olive, de palme, de soja, de tournesol, de ricin, de ricin déshydraté, de soja, de tung et de tallöl (résine de pin).

A titre de mono acides carboxyliques non gras utilisables pour préparer les résines alkydes, on peut citer également les acides abiétique, benzoïque, butanoïque, caproïque, caprylique, caprique, crotonique, para tertiobutylbenzoïque, pentanoïque et propanoïque, et leurs mélanges.

On préfère ajouter l'agent autoréticulable à base de résines alkydes dans la composition adhésive selon l'invention sous la forme d'une dispersion aqueuse dans laquelle la résine alkyde (i) est de préférence non miscible avec la résine alkyde (ii).

Avantageusement, on utilise en tant qu'agent autoréticulant à base d'alkyde, une dispersion aqueuse de résines alkydes (i) et (ii) telles que définies précédemment à base d'huile d'origine végétale telle que l'huile de tallôl.

En particulier, on peut utiliser le produit commercialisé sous la dénomination Secoia Exp 503 par la société Ecoat qui correspond à une dispersion aqueuse de résine alkyde à base d'huile de tallöl stabilisée par des tensioactifs anionique et non ionique, et comprenant de 49 à 51% en poids de matière sèche et environ 25% en poids de phase organique, par rapport au poids de la dispersion aqueuse.

La teneur totale en agent(s) autoréticulable(s) à base de résines alkydes présent(s) dans la composition adhésive selon l'invention va de préférence de 1 à 10% en poids sec du poids de la composition adhésive.

### C) Charge

La charge utilisable selon l'invention est de préférence choisie parmi les charges minérales.

La charge minérale utilisable selon l'invention peut être choisie parmi du carbonate de calcium, de la silice, un composite à base de silice et de kaolinite, de la sépiolite, et leur mélange.

La charge minérale utilisable selon l'invention peut comporter dans sa composition chimique de 0 à 15% en poids d'au moins un oxyde métallique choisi par exemple parmi Al₂O₃, Fe₂O₃, TiO₂, et leur mélange.

La charge utilisable selon l'invention possède de préférence une taille de particule supérieure ou égale à 1µm.

De préférence, la composition adhésive comprend à titre de charge:
- de 10 à 35% en poids de silice, par rapport au poids total de la composition adhésive,
- de 0 à 25% en poids d'un composite à base de silice et de kaolinite par rapport au poids total de la composition adhésive,
- de 0 à 2,5% en poids de sépiolite par rapport au poids total de la composition adhésive, la teneur totale en charge(s) présente(s) dans la composition adhésive allant de 10 à 40% en poids par rapport au poids de la composition adhésive.

Selon une première variante plus préférée, la composition adhésive comprend à titre de charge:
- de 15 à 25% en poids de silice par rapport au poids total de la composition adhésive,
- de 7 à 18% en poids d'un composite à base de silice et de kaolinite par rapport au poids total de la composition adhésive,
- 0 % en poids de sépiolite par rapport au poids total de la composition adhésive, la teneur totale en charge(s) présente(s) dans la composition adhésive étant en outre inférieure ou égale à 35% en poids par rapport au poids de la composition adhésive.

Selon une seconde variante plus préférée, la composition adhésive comprend à titre de charge:
- de 15 à 25% en poids de silice, par rapport au poids de total de la composition adhésive
- de 7 à 18% en poids d'un composite à base de silice et de kaolinite, par rapport au poids de total de la composition adhésive
- de 0,5 à 2% en poids de sépiolite, par rapport au poids de total de la composition adhésive, la teneur totale en charge(s) présente(s) dans la composition adhésive étant en outre inférieure ou égale à 35% en poids, par rapport au poids de la composition adhésive.

La silice utilisable selon l'invention comprend de préférence au moins 95% en poids de SiO₂, et plus préférentiellement au moins 98% en poids de SiO₂.

Le composite à base de silice et de kaolinite utilisable selon l'invention est de préférence un composite naturel de silice crypto-cristalline, de silice amorphe et de kaolinite, également connu sous le nom de silice de Neubourg.

Le composite à base de silice et de kaolinite utilisable selon l'invention peut être représenté idéalement par la formule générale suivante :

SiO₂ - Al₂[(OH)₄Si₂O₅]

Le composite à base de silice et de kaolinite utilisable selon l'invention peut comprendre de 55 à 70% en poids d'une phase minéralogique de silice crypto-cristalline, de 8 à 10% en poids d'une phase minéralogique de silice amorphe, et de 17 à 30% en poids de phase minéralogique de kaolinite, par rapport au poids dudit composite.

La sépiolite est un silicate de magnésium hydraté de la famille des phyllosilicates à structure fibreuse. Elle peut être représentée idéalement par la formule générale suivante :

Mg₄Si₆O₁₅(OH)₂.6H₂O

La charge utilisable selon l'invention peut être traitée ou non chimiquement, par exemple à l'aide d'un silane. Elle peut être calcinée ou non.

Les charges utilisables selon l'invention sont disponibles dans le commerce.

La teneur totale en charge(s) présente(s) dans la composition adhésive selon l'invention va de préférence de 15 à 40 % en poids sec du poids de la composition adhésive, plus préférentiellement de 22 à 35% en poids sec du poids de la composition adhésive.

### D) Emulsifiant

La composition adhésive selon l'invention comprend au moins un émulsifiant.

L'émulsifiant utilisable selon l'invention peut être choisi parmi les tensioactifs, les alcools polyvinyliques, et leurs mélanges.

Le tensioactif utilisable selon l'invention peut être anionique, non ionique, ou un mélange de tensioactifs anioniques et non ioniques.

Le tensioactif non ionique peut être choisi parmi les alcools gras saturés ou insaturés, de préférence insaturés, linéaires ou ramifiés, cycliques ou acycliques, oxyéthylénés, présentant un équilibre hydrophile lipophile (HLB) allant de 10 à 20 et/ou un point de trouble allant de 60 à 70°C.

Par alcool gras on entend un alcool, de préférence un monool, comprenant de 8 à 30 atomes de carbone et plus préférentiellement de 10 à 22 atomes de carbone.

Le tensioactif anionique peut être choisi parmi :
- les sels de mono/dialkyl phénoxybenzènedisulfonate de sodium, dont la partie alkyle, linéaire ou ramifiée, comporte de 10 à 14 atomes de carbone,
- les sels d'ester d'acide sulfosuccinique et d'alcool gras oxyéthylénés,
- les sels d'alkyl éther sulfate oxyéthylénés, dont la partie alkyle, linéaire ou ramifiée, comporte de 10 à 18 atomes de carbone.

De préférence, on utilise un système d'au moins deux et de préférence au moins trois émulsifiants choisis parmi les émulsifiants suivants :
- les alcools gras insaturés acycliques oxyéthylénés possédant un HLB allant de 15 à 18, de préférence les alcools insaturés en C₁₆-C₁₈ acycliques oxyéthylénés possédant un HLB allant de 15 à 18,
- les alcools gras insaturés cycliques oxyéthylénés possédant un point de trouble allant de 63 à 67°C, de préférence les alcools gras cycliques aromatiques oxyéthylénés possédant un point de trouble allant de 63 à 67°C, tels que le distyrylphénol éthoxylé,
- les mélanges de sels de mono et dialkyl phénoxybenzènedisulfonate, dont la partie alkyle, linéaire ou ramifiée, comporte de 10 à 14 atomes de carbone, tels que les mélanges de sels de monododécyl phénoxybenzènedisulfonate et de didodécyl phénoxybenzènedisulfonate,
- les sels d'hémi ester d'acide sulfosuccinique et d'alcool comportant de 10 à 14 atomes de carbone, oxyéthylénés, tels que les sels d'hémi ester d'acide sulfosuccinique et d'alcool laurique, oxyéthylénés,
- les sels d'alkyl éther sulfate oxyéthylénés, dont la partie alkyle, linéaire ou ramifiée, comporte de 12 à 14 atomes de carbone, tels que les sels de lauryl éther sulfate oxyéthylénés,
- les alcools polyvinyliques.

Plus préférentiellement, les sels sus-cités sont choisis parmi les sels de sodium.

Les émulsifiants utilisables selon l'invention sont disponibles dans le commerce.

La teneur totale en émulsifiant(s) présent(s) dans la composition adhésive selon l'invention va de préférence de 0,5 à 2,5 % en poids sec du poids de la composition adhésive.

### E) Eau

De préférence, la composition adhésive selon l'invention comprend de 20 à 40% en poids d'eau par rapport au poids total de la composition adhésive.

Plus préférentiellement, la composition adhésive selon l'invention comprend de 20 à 35% en poids d'eau par rapport au poids total de la composition adhésive.

De préférence, la composition adhésive comprend moins de 1% en poids de solvant organique volatil. Plus préférentiellement, la composition adhésive ne comprend pas de solvants organiques volatils tels que ceux ayant un point d'ébullition inférieur à 250°C à pression atmosphérique.

### F) Oxyde métallique

La composition adhésive selon l'invention peut comprendre en outre au moins un oxyde métallique.

L'oxyde métallique utilisable selon l'invention est de préférence un oxyde d'un métal divalent tel que ZnO, MgO, CaO. Plus préférentiellement, on utilise un oxyde métallique insoluble ou peu soluble dans l'eau tel que ZnO.

L'ajout d'oxyde métallique dans la composition adhésive permet d'améliorer sa stabilité au stockage.

Sans être limité par la théorie, l'oxyde métallique utilisable selon l'invention joue le rôle de capteur d'acidité. Il permet de « capter » l'acide chlorhydrique libéré par la réaction de la dégradation du polychloroprène au cours du temps, et d'empêcher ainsi que celui-ci n'auto entretienne la réaction de dégradation du polychloroprène.

L'oxyde métallique utilisable selon l'invention se présente sous la forme d'un solide pulvérulent.

La teneur totale en oxyde(s) métallique(s) présent(s) dans la composition adhésive selon l'invention va de préférence de 0,05 à 0,3% en poids sec, et plus préférentiellement de 0,1 à 0,25 % en poids sec du poids de la composition adhésive.

### G) Agent d'adhérence

La composition adhésive selon l'invention peut comprendre en outre au moins un agent d'adhérence choisi parmi les copolymères de styrène et d'acide (méth)acrylique, les copolymères de styrène et d'ester d'acide (méth)acrylique, les copolymères de styrène et de (méth)acrylamide, lesdits copolymères pouvant être silanisés, les homopolymères et copolymères du butadiène tel que le polybutadiène et polybutadiène-styrène, les polymères de vinylacétate tel que le copolymère d'acide (méth)acrylique et de vinylacétate, les polyuréthanes obtenus à partir d'au moins un polyol et d'au moins un polyisocyanate, les mélanges comprenant d'une part au moins un polyuréthane obtenu à partir d'au moins un polyol et d'au moins un polyisocyanate et d'autre part au moins un polyester obtenu par polycondensation entre au moins un polyol et au moins un polyacide.

En particulier, les monomères d'acide (méth)acrylique ou d'ester d'acide (méth)acrylique utilisables pour préparer l'agent d'adhérence peuvent être choisis parmi :
- l'acide acrylique, l'acide méthacrylique,
- le (méth)acrylate d'alkyle dont la partie alkyle, linéaire ou ramifiée, cyclique ou acyclique, comporte de 1 à 18 atomes de carbone,
- le (méth)acrylate d'allyle,
- le (méth)acrylate d'alkyl éther (ou alkyloxyalkyl), dont chacune des parties alkyle, pouvant être identiques ou différentes, est linéaire ou ramifiée, et comporte de 1 à 18 atomes de carbone,
- le (méth)acrylate d'alkyl aryle éther (ou (méth)acrylate d'aryloxyalkyl), dont la partie alkyle, linéaire ou ramifiée, comporte de 1 à 18 atomes de carbone, et la partie aryle est un groupe phényle,
- le (méth)acrylate d'hydroxyalkyl dont la partie alkyle, linéaire ou ramifiée, comporte de 1 à 18 atomes de carbone, et est éventuellement interrompue par des fonctions ester -C(=O)-O-,
- le (méth)acrylate de polypropylène glycol ou de polyéthylène glycol.

Plus précisément, les monomères d'acide (méth)acrylique ou d'ester d'acide (méth)acrylique peuvent être choisis parmi l'acrylate de méthyle, le méthacrylate de méthyle, l'acrylate d'éthyle, le méthacrylate d'éthyle, l'acrylate de butyle, le méthacrylate de butyle, l'acrylate d'isobutyle, le méthacrylate d'isobutyle, l'acrylate de n-hexyle, le méthacrylate de n-hexyle, l'acrylate d'éthylhexyle, le méthacrylate d'éthylhexyle, l'acrylate de n-heptyle, le méthacrylate de n-heptyle, l'acrylate de stéaryle, le méthacrylate de stéaryle, le méthacrylate de glycidyle, l'acrylate d'hydroxyéthyle, le méthacrylate d'hydroxyéthyle, le méthacrylate d'allyle, l'acrylate de cyclohexyle, le méthacrylate de cyclohexyle, le 2-éthoxyéthyle-acrylate, le 2-éthoxyéthyle-méthacrylate, l'acrylate d'isodécyle, le méthacrylate d'isodécyle, le 2-méthoxyéthyle-acrylate, le 2-éthoxyéthyle-méthacrylate, le 2-(2-éthoxyéthoxy)-éthylacrylate, l'acrylate de 2-phénoxyéthyle, le méthacrylate de 2-phénoxyéthyle, l'acrylate d'isobornyle, le méthacrylate d'isobornyle, l'acrylate de caprolactone, le méthacrylate de caprolactone, l'acrylate de polypropylène glycol, le méthacrylate de polypropylène glycol, l'acrylate de polyéthylène glycol, le méthacrylate de polyéthylène glycol, l'acrylate de benzyle, le méthacrylate de benzyle.

De préférence, l'agent d'adhérence est choisi parmi les copolymères de styrène et d'acide acrylique et les copolymères de styrène et d'ester d'acide acrylique, éventuellement silanisé, les copolymères d'acide (méth)acrylique et de vinylacétate, les polyuréthanes tels que définis ci-avant, les mélanges de polyuréthane(s) et de polyester(s) tels que définis ci-avant, et leurs mélanges.

L'agent d'adhérence utilisable selon l'invention est dispersible ou soluble dans l'eau, et présente de préférence une température de transition vitreuse (Tg) inférieure ou égale à 65°C, et plus préférentiellement allant de 5 à 65°C.

Par ailleurs, on préfère ajouter dans la composition adhésive le(s) agent(s) d'adhérence sus-cité(s) sous forme de dispersion(s) aqueuse(s) pouvant présenter une teneur en matière sèche allant de 40 à 60 % en poids du poids total de ladite dispersion aqueuse.

De tels produits sont vendus par exemple sous la dénomination « Acronal® S813 » (copolymère de styrène et d'ester d'acide acrylique, ayant une Tg de 28°C, sous forme de dispersion aqueuse à 49 à 51% en poids d'extrait sec), « Acronal® S533 » (copolymère de styrène et d'acide acrylique, ayant une Tg de 5°C, sous forme de dispersion aqueuse à 51 à 53% en poids d'extrait sec) par la société BASF, « Plextol R 5530 » (copolymère d'acide acrylique et d'acétate de vinyle, ayant une Tg de 33°C, sous forme de dispersion aqueuse à 46% en poids d'extrait sec environ) par la société Synthomer.

La teneur totale en agent(s) d'adhérence présent(s) dans la composition adhésive selon l'invention va de préférence de 1 à 20 % en poids sec du poids de la composition adhésive.

### H) Résine tackifiante

La composition adhésive selon l'invention peut comprendre en outre au moins une résine tackifiante.

A titre d'exemple de résine(s) tackifiante(s) utilisable(s), on peut citer n'importe quelle résine tackifiante habituellement utilisée dans le domaine des compositions adhésives.

De préférence, on utilise une résine tackifiante possédant une masse molaire moyenne en poids (M_{w}) allant de 200 et 5000 et de préférence choisies parmi :
- (i) des colophanes d'origine naturelle ou chimiquement modifiées, telles que par exemple la colophane extraite de la gomme de pins, la colophane de bois extraite des racines de l'arbre et leurs dérivés hydrogénés, dimérisés, polymérisés ou estérifiés par des monoalcools ou des polyols comme le glycérol, le pentaérythritol ou le néopentylglycol, éventuellement oxyéthyléné tel que triéthylèneglycol ;
- (ii) des résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières ;
- (iii) des résines terpéniques résultant généralement de la polymérisation d'hydrocarbures terpéniques comme par exemple le mono-terpène (ou pinène) en présence de catalyseurs de Friedel-Crafts, éventuellement modifiées par action de phénols ;
- (iv) des copolymères à base de terpènes naturels, par exemple le styrène/terpène, l'alpha-méthyl styrène/terpène et le vinyl toluène/terpène,
- et leur mélange.

De préférence, la résine tackifiante utilisable selon l'invention est choisie parmi :
- (i) les esters de colophanes obtenues par estérification de colophanes par des monoalcools ou des polyols comme le glycérol, le pentaérythritol ou le néopentylglycol, éventuellement oxyéthyléné tel que triéthylèneglycol, et
   (iii) les résines terpène-phénol résultant de la polymérisation d'hydrocarbures terpéniques comme par exemple le mono-terpène (ou pinène) en présence de catalyseurs de Friedel-Crafts, modifiées par action de phénols,
- et leur mélange.

La résine tackifiante utilisable selon l'invention peut être ajoutée dans la composition adhésive de l'invention sous forme de dispersion aqueuse présentant par exemple une teneur en matière sèche allant de 40 à 60 % en poids du poids total de ladite dispersion aqueuse.

Les résines tackifiantes utilisables selon l'invention sont disponibles dans le commerce.

On peut citer à titre d'exemple, la résine tackifiante commercialisée sous la dénomination « Granolit 150N » par la société Granel S.A., qui correspond à une colophane modifiée estérifiée au triéthylèneglycol, ou encore la dispersion aqueuse de résine tackifiante commercialisée sous la dénomination « Demulsene TR 602 » par la société DRT, qui correspond à une dispersion aqueuse d'une résine terpène-phénol à 55% en poids environ d'extrait sec par rapport au poids du produit commercial.

La teneur totale en résine(s) tackifiante(s) présente(s) dans la composition adhésive selon l'invention va de préférence de 3 à 20 % en poids sec du poids de la composition adhésive.

### I) Epaississant

La composition adhésive selon l'invention peut comprendre en outre au moins un épaississant.

On peut utiliser n'importe quel type d'épaississant organique ou minéral habituellement employé dans une composition adhésive.

En particulier, les épaississants organiques peuvent être des polymères épaississants associatifs ou non associatifs, différents des polymères cités plus haut dans la présente demande.

Par polymère épaississant associatif, on entend un polymère amphiphile comportant des groupes hydrophiles et des groupes hydrophobes, lesdits groupes hydrophobes ayant tendance, en milieu aqueux, à s'assembler entre eux ou avec des parties hydrophobes d'autres molécules, telles que des tensioactifs, pour conduire à un épaississement du milieu.

Les groupes hydrophiles et les groupes hydrophobes peuvent être positionnés dans la chaine principale du polymère épaississant associatif ou en bout de chaine. Ils peuvent être en particulier distribués de manière séquencée dans la chaine principale dudit polymère.

Les groupes hydrophiles et les groupes hydrophobes peuvent également être pendants (ou greffés) à la chaine principale du polymère épaississant associatif, ou être sur des groupes pendants (ou greffés) à la chaine principale dudit polymère.

Les groupes hydrophiles des polymères épaississants associatifs peuvent être choisis parmi des groupes uréthanes, des groupes carboxyliques sous forme acide (COOH), des groupes éthers (oxyalkylène) et des groupes esters d'acide carboxylique, et leurs mélanges. De préférence, les groupes hydrophiles des polymères épaississants associatifs sont choisis parmi des groupes uréthanes, des groupes acide (méth)acrylique, des groupes oxyde d'éthylène et/ou oxyde de propylène, des groupes esters d'acide (méth)acrylique, et leurs mélanges.

Les groupes hydrophobes des polymères épaississants associatifs peuvent être choisis parmi des groupes hydrocarbonés en C₈-C₃₀, et de préférence en C₁₀-C₂₂, tels que décrits précédemment.

A titre d'exemple d'épaississant utilisable selon l'invention, on peut citer par exemple les polymères épaississants de type polyacrylique ou polyacrylates, les polymères épaississants de type polyuréthane, les polymères épaississants de type cellulosique tel que les méthylcelluloses, les polymères épaississants de type polysaccharide tels que les alginates, les argiles, et leurs mélanges.

De préférence, l'épaississant est choisi parmi les polymères épaississants associatifs, et plus préférentiellement parmi les polyuréthanes associatifs, les polymères acryliques associatifs, et leurs mélanges.

Les polyuréthanes associatifs et les polymères acryliques associatifs utilisables selon l'invention sont connus respectivement sous les noms HEUR (selon l'acronyme anglo-saxon « Hydrophobically modified Ethylene oxyde URethane) et HASE (selon l'acronyme anglo-saxon « Hydrophobically Alkali Soluble Emulsion).

Ces derniers peuvent être définis à partir des monomères qui les constituent: le premier est à base d'acide (méth)acrylique, le deuxième est un ester de cet acide, et le troisième est un monomère hydrophobe associatif. A titre d'exemples, on pourra citer notamment les demandes de brevet européennes EP 0 577 526 A1, EP 1 778 797 A1, EP 2 108007 A1, 15 EP 2 114378 A1, EP 2 303 982 A1, et les demandes de brevet françaises FR 2 950 061 A1, FR 2 956 862 A1, FR 2 982 263 A1.

De préférence, on utilise un polymère épaississant associatif non ionique.

Plus préférentiellement, on utilise un polyuréthane associatif épaississant obtenu à partir d'au moins un polyol et d'au moins un polyisocyanate, et comprenant au moins un groupe hydrocarboné saturé ou insaturé, linéaire ou ramifié, cyclique ou acyclique, comportant de 8 à 30 atomes de carbone, ledit polyuréthane associatif pouvant en outre comporter ou non un ou plusieurs groupes oxyalkylène en C₁-C₄.

Les polymères épaississants associatifs utilisables selon l'invention sont disponibles dans le commerce. On peut citer à titre d'exemple, l'épaississant commercialisé sous la dénomination « Coapur 3025 » par la société Coatex, qui correspond à un polyuréthane associatif épaississant non ionique.

La teneur totale en épaississant(s) présent(s) dans la composition adhésive selon l'invention va de préférence de 0,05 à 0,8 % en poids sec du poids de la composition adhésive.

### J) PVC

La composition adhésive selon l'invention comprend de préférence au moins du polychlorure de vinyle (PVC).

Celui-ci est ajouté sous forme pulvérulente dans la composition adhésive et permet d'améliorer les propriétés mécaniques de la composition adhésive, notamment en terme de dureté.

La teneur totale en PVC présent dans la composition adhésive selon l'invention va de préférence de 0,1 à 10 % en poids sec du poids de la composition adhésive.

### K) Dispersion aqueuse de nanoparticules de silice

La composition adhésive selon l'invention peut comprendre en outre au moins une dispersion aqueuse de nanoparticules de silice.

Les nanoparticules de silice utilisable possèdent de préférence une taille de particules inférieure à 50 nm, plus préférentiellement inférieure à 20 nm.

Les nanoparticules de silice sont de préférence traitées à l'aide d'un agent époxysilane.

La teneur en poids sec de dispersion de nanoparticules de silice présente dans la composition adhésive selon l'invention va de préférence de 0,5 à 5 % en poids du poids de la composition adhésive.

### L) Additif

La composition adhésive selon l'invention peut comprendre en outre un ou plusieurs additifs habituellement utilisés dans les compositions adhésives, choisis par exemple parmi les anti-oxydants, les pigments, les agents de conservation en pot, les anti-mousses, les antifongiques, les anti-bactériens, les ajusteurs de pH alcalins tel que KOH, avec une teneur total en additif(s) pouvant aller de 0,1 à 2 % en poids par rapport au poids de la composition adhésive.

La composition adhésive selon l'invention comprend de préférence un pH supérieur ou égale à 8,5, et de préférence allant de 8,7 à 10.

La composition adhésive selon l'invention est stable au stockage, c'est-à-dire qu'elle ne prend pas en masse au cours du temps lorsqu'elle est stockée sous la forme d'une composition monocomposante.

Lorsque l'on utilise des charges particulières telles que citées précédemment, la composition adhésive selon l'invention est particulièrement stable dans le temps. En effet, on observe dans ce cas que la viscosité de la composition adhésive mesurée après 28 jours de conditionnement à 23°C après préparation de la composition adhésive, n'augmente pas plus de 25% par rapport à sa valeur dite initiale mesurée 24h après préparation de la composition adhésive.

La composition adhésive selon l'invention est facile à mettre en œuvre. En particulier, elle présente une viscosité telle que son enduction est aisée à basse température (10 à 25°C).

La composition adhésive selon l'invention possède de préférence une viscosité allant de 30 000 à 120 000 mPa.s, mesurée à 23°C, 24 heures après sa préparation.

La composition adhésive selon l'invention est facile à préparer. En particulier, elle ne prend pas en masse à l'issue ou au cours de son procédé de préparation.

La composition adhésive selon l'invention est préparée en mélangeant les différents ingrédients. Les charges ainsi que l'épaississant seront introduits en dernier.

De préférence, le temps de mélange est supérieur ou égale à 90 minutes.

La présente invention concerne également l'utilisation d'une composition adhésive selon l'invention telle que décrite précédemment, comme colle contact.

La composition adhésive selon l'invention peut être utilisée pour assembler un large panel de matériaux choisi par exemple parmi le bois, pouvant être sous forme d'agglomérés, de stratifiés, de contreplaqués, le PVC, le PS, le caoutchouc, les métaux tels que l'acier et l'aluminium, le textile, les produits de ragréage tels que les produits à base de ciment.

Elle peut être utilisée notamment pour le collage d'un premier matériau sur un second matériau rigide.

En particulier, la composition adhésive selon l'invention est particulièrement adaptée pour le collage d'un revêtement de sol sur un produit de ragréage.

La composition adhésive selon l'invention est appliquée en double encollage à raison d'environ au moins 150g/m², de préférence d'au moins 200g/m², sur chacune des surfaces de matériaux à assembler. L'application peut être réalisée à l'aide d'une spatule crantée de dimension normalisée permettant de déposer la composition adhésive en une couche homogène, tout en maitrisant le grammage appliqué. Le grammage appliqué sur chacune des surfaces des matériaux peut atteindre à 300 voire 350 g/m².

La composition est ensuite laissée sécher pendant un temps inférieur à 3 heures jusqu'à obtention de films adhésifs secs au toucher. Cette vérification peut être réalisée conformément à la méthode décrite plus bas dans les exemples. Dès lors qu'il n'y a plus de transfert de colle sur le doigt ou sur le papier, on considère que les films adhésifs sont suffisamment secs pour pouvoir être pressés l'un contre l'autre.

Puis les matériaux sont assemblés par pressage des films adhésifs formés l'un contre l'autre.

Les exemples suivants sont donnés à titre purement illustratif de l'invention et ne sauraient être interprétés pour en limiter la portée.

### Exemples de l'invention :

Les compositions des exemples 1 à 10 selon l'invention sont préparées à partir des différents ingrédients indiqués dans le tableau 1, en mélangeant les ingrédients un à un dans un mélangeur et en ajoutant les charges et l'épaississant en dernier.

Les teneurs indiquées dans le tableau 1 sont exprimées en % en poids d'ingrédients sec par rapport au poids total de la composition.

Chaque composition est ensuite soumise aux tests décrits ci-dessous.

Les colles contact à base aqueuse de néoprène commercialisées sous la dénomination « Cege100 contact » par la société Cegecol (comprenant 5% en poids de charge environ) (C2) et « Uzin Wk 222 » par la société Uzin (comprenant 22% en poids de charge environ) (C1) sont testées dans les mêmes conditions que les compositions adhésives des exemples 1 à 10 selon l'invention.

### 1/ Evaluation du temps de séchage

Pour ces essais, on utilise un support en bois stratifié de 30 cm de long, 30 cm de large et 1,5 mm d'épaisseur environ et un support aggloméré de bois standard CTBS de 30 cm de long, 30 cm de large et 3 cm d'épaisseur environ.

La composition adhésive est appliquée sur la surface en bois (contreparement) du support stratifié et la surface du support aggloméré de bois standard CTBS, à l'aide d'une spatule crantée normalisée permettant de déposer environ 200g/m² de composition sur chaque surface des supports.

Les supports enduits de colle sont laissés sécher à l'air libre à 20°C, dans un milieu humide à 65% d'humidité relative.

Le temps de séchage sur le support est évalué qualitativement en exerçant régulièrement à l'aide d'un doigt ou d'un papier une légère pression sur les sillons de colle. On estime que la colle est sèche lorsqu'il n'y a pas de transfert de colle sur le doigt ou sur le papier.

Les temps de séchage observés sur le support aggloméré sont inférieurs aux temps de séchage observés sur le support stratifié du fait de la plus grande porosité du support aggloméré.

Seuls les résultats de temps de séchage sur le support stratifié ont donc été conservés et consignés dans le tableau 2 ci-dessous. Les résultats sont exprimés en minutes.

### 2/ Evaluation des propriétés mécaniques par la résistance au cisaillement

Sauf indication contraire dans la présente demande, la préparation des éprouvettes et les essais de résistance au cisaillement en traction ont été réalisés conformément à la norme ISO 4587:2003, en utilisant un dynamomètre Zwick Z020 (exerçant une traction verticale à une vitesse constante de 500 mètres par seconde).

Pour ces essais, on utilise une éprouvette en hêtre de 10 cm de long, 2,5 cm de large et 3 mm d'épaisseur et une éprouvette en bois stratifié de même dimension (longueur, largeur, épaisseur).

La composition adhésive est appliquée en double encollage sur les deux éprouvettes à l'aide d'une spatule crantée normalisée permettant de déposer environ 200 g/m² de composition sur chaque surface des éprouvettes. La composition adhésive est appliquée sur une des extrémités de chaque éprouvette sur une zone de collage de 2,5 cm de long et 2,5 cm de large.

Une fois enduites de colle, les éprouvettes sont laissées sécher à l'air libre à 20°C, dans un milieu présentant un taux d'humidité compris entre 55% et 65% d'humidité relative.

Lorsque la colle est sèche, les deux éprouvettes sont assemblées au niveau de la zone encollée, puis serrées à l'aide d'un banc de serrage jusqu'au temps t auquel les éprouvettes sont tirées.

La montée en cohésion de la composition adhésive est évaluée en mesurant à différents temps t (2 heures, 24 heures et 7 jours respectivement, après encollage) la résistance du joint adhésif soumis à une contrainte en cisaillement.

Les résultats sont exprimés en kilogramme par centimètre carré et sont consignés dans le tableau 2 ci-dessous.

### 3/ Evaluation de la tenue à la chaleur

Cet essais est réalisé afin d'évaluer la résistance thermique du collage lorsque l'assemblage collé est sollicité en température.

Pour ces essais, on utilise une éprouvette en hêtre de 10 cm de long, 2,5 cm de large et 3 mm d'épaisseur et une éprouvette en bois stratifié de même dimension (longueur, largeur, épaisseur).

La composition adhésive est appliquée sur une des extrémités de chaque éprouvette sur une zone de collage de 2,5 cm de long et 2,5 cm de large.

Une fois enduites de colle, les éprouvettes sont laissées sécher à l'air libre à 20°C, dans un milieu présentant un taux d'humidité compris entre 55% et 65% d'humidité relative.

La composition adhésive est appliquée en double encollage sur les deux éprouvettes à l'aide d'une spatule crantée normalisée permettant de déposer environ 200 g/m² de composition sur chaque surface des éprouvettes.

Lorsque la colle est sèche, les deux supports sont assemblés puis serrés à l'aide d'un banc de serrage. L'assemblage est laissé à l'air libre pendant 14 jours à 20°C dans un milieu présentant un taux d'humidité compris entre 55% et 65% d'humidité relative. Les éprouvettes sont ensuite introduites dans une étuve réglée à 23°C, et un poids de 5 kg est accroché à l'extrémité d'une des éprouvettes perpendiculairement au plan de collage. Un gradient de température est appliqué dans l'étuve avec une montée en température de 4,5°C par minute et on observe à quelle température l'assemblage collé cède sous l'effet du poids.

Les résultats sont exprimés en degré Celcius et sont consignés dans le tableau 2 ci-dessous.

### 4/ Qualité du maintien initial

Pour ces essais, on utilise les mêmes supports que pour l'essai de l'évaluation du temps de séchage. L'enduction est réalisée de la même façon et dans les mêmes conditions que pour le test de l'évaluation du temps de séchage. Les éprouvettes sont ensuite superposées au niveau de leur surface enduite en laissant dépasser une bordure de 2 cm pour faciliter la prise au moment du test de décollement.

Immédiatement après avoir joint par pressage manuel les éprouvettes encollées, l'assemblage collé est posé sur une table sur la tranche de la longueur et est soumis au niveau du joint adhésif (2) à une force de décollement exercée par un même opérateur. Pour décoller les deux éprouvettes, l'opérateur maintient d'une main l'une des éprouvettes (1) et tire de l'autre main l'extrémité de l'autre éprouvette (3) en exerçant une force de décollement perpendiculaire (5) au plan de collage (4) de l'assemblage.

La figure 1 correspond à une vue de dessus de l'assemblage collé et montre en pointillé (6) la direction et la trajectoire de la main tirant sur l'extrémité de l'éprouvette (3) pour la décoller de l'éprouvette (1). La trajectoire de la main tirant sur l'extrémité de l'éprouvette (3) est à peu près celle d'un quart de cercle de rayon égal à la longueur des éprouvettes collées.

Lorsque l'opérateur parvient à décoller les supports sans effort, on estime que le maintien initial de la colle est faible (noté par moins « - » dans le tableau 2 des résultats).

Lorsque l'opérateur doit fournir un effort pour décoller les supports, on estime que le maintien initial de la colle est fort (noté par moins « + » dans le tableau 2 des résultats).

Lorsque la force exercée par l'opérateur est insuffisante pour décoller les supports, on estime que le maintien initial de la colle est excellent (noté par moins « ++ » dans le tableau 2 des résultats).

### 5/ Evaluation de la stabilité en pot

La composition adhésive est conservée à 23 °C et 50 % d'humidité relative. La viscosité est mesurée tous les 7 jours. Si au bout de 28 jours, l'augmentation de viscosité mesurée à 28 jours représente moins de 25% de la valeur de la viscosité mesurée 24 heures après la préparation de la colle, alors on considère que la formulation est stable et n'évolue pas dans le temps.

Les résultats sont consignés dans le tableau 2 ci-dessous.

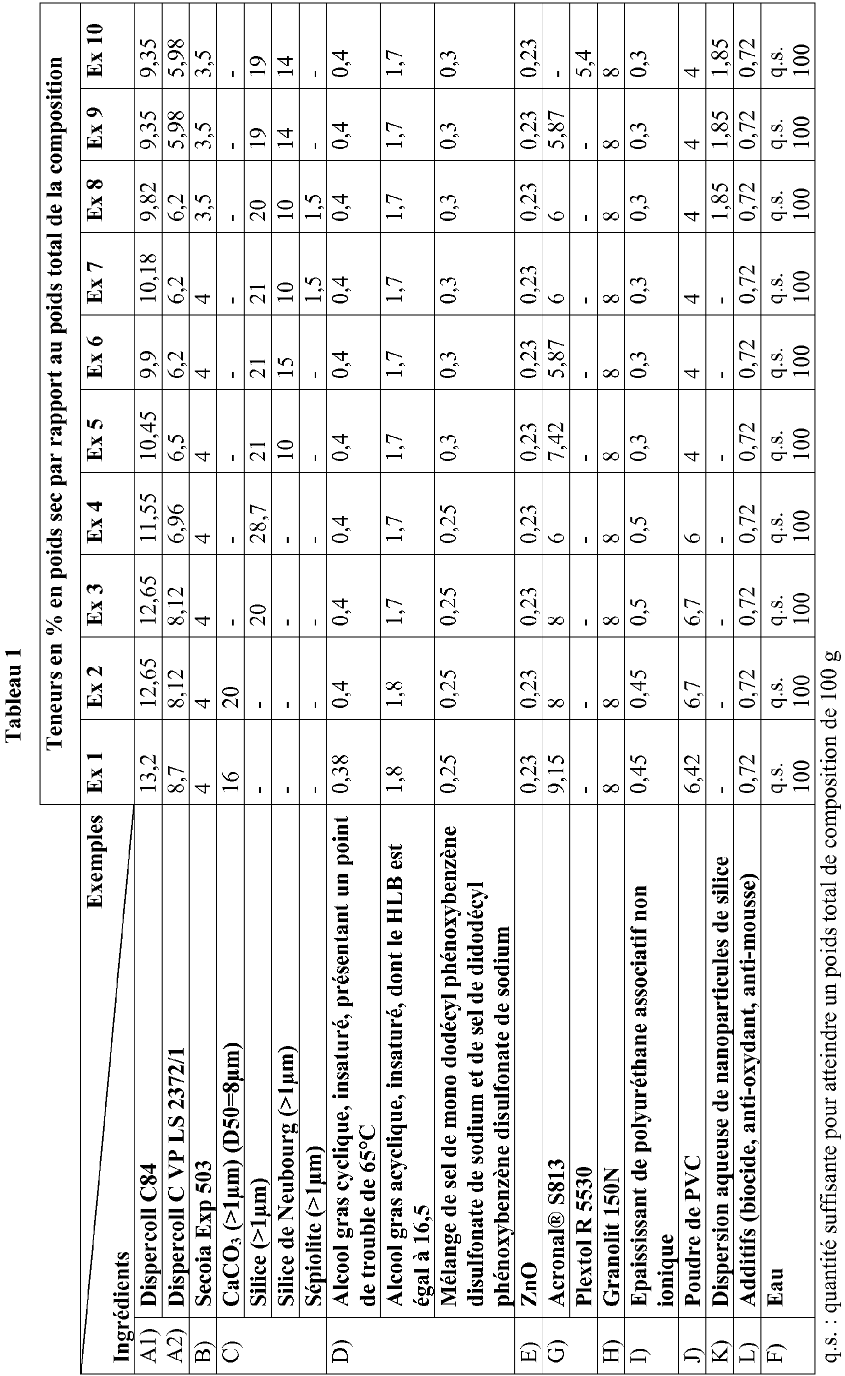

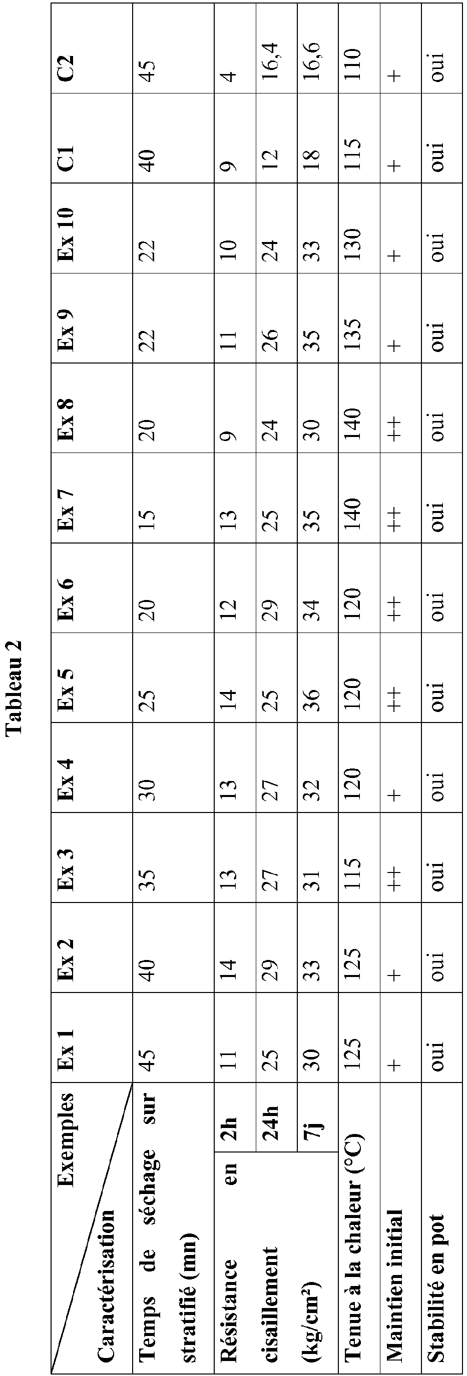

## Revendications

1. Composition adhésive comprenant :
A) de 5 à 40 % en poids sec d'un mélange de polychloroprènes dispersés dans l'eau comprenant :
A1) au moins un polychloroprène présentant une dureté supérieure ou égale à 80 shore A, et
A2) au moins un polychloroprène présentant une dureté inférieure ou égale à 60 shore A,
B) de 0,5 à 25 % en poids sec d'au moins un agent autoréticulable de type alkyde,
C) de 10 à 40% en poids sec d'au moins une charge minérale,
D) de 0,05 à 3% en poids sec d'au moins un émulsifiant,
E) de l'eau.

2. Composition adhésive selon la revendication 1, **caractérisée en ce que** le mélange de polychloroprènes A) comprend :
A1) au moins un polychloroprène en dispersion aqueuse présentant une dureté supérieure ou égale à 85 shore A, et/ou
A2) au moins un polychloroprène en dispersion aqueuse présentant une dureté inférieure ou égale à 55 shore A.

3. Composition adhésive selon l'une quelconque des revendications 1 à 2, **caractérisée en ce que** l'agent autoréticulable de type alkyde constitué :
(i) d'au moins une résine alkyde comportant au moins une fonction cyclocarbonate à 5 chainons (Y) et
(ii) d'au moins une résine alkyde comportant au moins une fonction amine primaire (X) salifiée par un acide ayant un pKa allant de 1 à 14, possédant une chaine carbonée comportant de 1 à 6 atomes de carbone.

4. Composition adhésive selon l'une quelconque des revendications 1 à 3, **caractérisée en ce que** la charge minérale est choisie parmi du carbonate de calcium, de la silice, un composite à base de silice et de kaolinite, de la sépiolite, et leur mélange.

5. Composition adhésive selon l'une quelconque des revendications 1 à 4, **caractérisée en ce que** l'émulsifiant est un système d'au moins deux émulsifiants choisis parmi les émulsifiants suivants :
- les alcools gras insaturés acycliques oxyéthylénés possédant un HLB allant de 15 à 18,
- les alcools gras insaturés cycliques oxyéthylénés possédant un point de trouble allant de 63 à 67°C,
- les mélanges de sels de mono et dialkyl phénoxybenzènedisulfonate, dont la partie alkyle, linéaire ou ramifiée, comporte de 10 à 14 atomes de carbone,
- les sels d'hémi ester d'acide sulfosuccinique et d'alcool comportant de 10 à 14 atomes de carbone, oxyéthylénés,
- les sels d'alkyl éther sulfate oxyéthylénés, dont la partie alkyle, linéaire ou ramifiée, comporte de 12 à 14 atomes de carbone,
- les alcools polyvinyliques.

6. Composition adhésive selon l'une quelconque des revendications 1 à 5, **caractérisée en ce qu'**elle comprend :
- au moins un oxyde métallique,
- au moins un agent d'adhérence choisi parmi les copolymères de styrène et d'acide (méth)acrylique, les copolymères de styrène et d'ester d'acide (méth)acrylique, les copolymères de styrène et de (méth)acrylamide, lesdits copolymères pouvant être silanisés, les homopolymères et copolymères du butadiène tel que le polybutadiène et polybutadiène-styrène, les polymères de vinylacétate, tel que le copolymère d'acide (méth)acrylique et de vinylacétate, les polyuréthanes obtenus à partir d'au moins un polyol et d'au moins un polyisocyanates, les mélanges comprenant d'une part au moins un polyuréthane obtenu à partir d'au moins un polyol et d'au moins un polyisocyanate et d'autre part au moins un polyester obtenu par polycondensation entre au moins un polyol et au moins un polyacide,
- au moins une résine tackifiante,
- au moins un épaississant,
- au moins du polychlorure de vinyle, et/ou
- au moins une dispersion aqueuse de nanoparticules de silice.

7. Composition adhésive selon la revendication 6, **caractérisée en ce que** l'oxyde métallique est ZnO.

8. Composition adhésive selon l'une quelconque des revendications 1 à 7, **caractérisée en ce qu'**elle possède une viscosité allant de 30 000 à 120 000 mPa.s, mesurée à 23°C.

9. Structure multicouches comprenant au moins deux couches de matériaux, identiques ou différents, liées entre elles par une couche de composition adhésive telle que définie dans l'une quelconque des revendications 1 à 8.

10. Utilisation de la composition adhésive telle que définie dans l'une quelconque des revendications 1 à 8 comme colle contact.

## Patentansprüche

1. Klebstoffzusammensetzung, umfassend:
A) 5 bis 40 Trockengewichtsprozent einer Mischung von in Wasser dispergierten Polychloroprenen, umfassend:
A1) mindestens ein Polychloropren mit einer Härte größer oder gleich 80 Shore A und
A2) mindestens ein Polychloropren mit einer Härte kleiner oder gleich 60 Shore A,
B) 0,5 bis 25 Trockengewichtsprozent mindestens eines selbstvernetzenden Mittels vom Alkyd-Typ,
C) 10 bis 40 Trockengewichtsprozent mindestens eines mineralischen Füllstoffs,
D) 0,05 bis 3 Trockengewichtsprozent mindestens eines Emulgators,
E) Wasser.

2. Klebstoffzusammensetzung nach Anspruch 1, **dadurch gekennzeichnet, dass** die Mischung von Polychloroprenen A)
A1) mindestens ein Polychloropren in wässrige Dispersion mit einer Härte größer oder gleich 85 Shore A und/oder
A2) mindestens ein Polychloropren in wässriger Dispersion mit einer Härte kleiner oder gleich 55 Shore A,
umfasst.

3. Klebstoffzusammensetzung nach einem der Ansprüche 1 bis 2, **dadurch gekennzeichnet, dass** das selbstvernetzende Mittel vom Alkyd-Typ aus
(i) mindestens einem Alkydharz mit mindestens einer 5-gliedrigen Cyclocarbonatfunktion (Y) und
(ii) mindestens einem Alkydharz mit mindestens einer mit einer Säure mit einem pKa-Wert im Bereich von 1 bis 14 und einer Kohlenstoffkette mit 1 bis 6 Kohlenstoffatomen versalzten primären Aminfunktion (X)
besteht.

4. Klebstoffzusammensetzung nach einem der Ansprüche 1 bis 3, **dadurch gekennzeichnet, dass** der mineralische Füllstoff aus Calciumcarbonat, Siliciumdioxid, einem Komposit auf Basis von Siliciumdioxid und Kaolinit, Sepiolith und einer Mischung davon ausgewählt ist.

5. Klebstoffzusammensetzung nach einem der Ansprüche 1 bis 4, **dadurch gekennzeichnet, dass** es sich bei dem Emulgator um ein System aus mindestens zwei Emulgatoren handelt, die aus den folgenden Emulgatoren ausgewählt sind:
- oxyethylenierten ungesättigten acyclischen Fettalkoholen mit einem HLB-Wert im Bereich von 15 bis 18,
- oxyethylenierten ungesättigten cyclischen Fettalkoholen mit einem Trübungspunkt im Bereich von 63 bis 67°C;
- Mischungen von Mono- und Dialkylphenoxybenzoldisulfonatsalzen, deren linearer oder verzweigter Alkylteil 10 bis 14 Kohlenstoffatome umfasst,
- oxyethylenierten Salzen von Halbestern von Sulfobernsteinsäure und Alkohol mit 10 bis 14 Kohlenstoffatomen,
- oxyethylenierten Alkylethersulfatsalzen, deren linearer oder verzweigter Alkylteil 12 bis 14 Kohlenstoffatome umfasst,
- Polyvinylalkoholen.

6. Klebstoffzusammensetzung nach einem der Ansprüche 1 bis 5, **dadurch gekennzeichnet, dass** sie
- mindestens ein Metalloxid,
- mindestens ein Haftmittel, das aus Copolymeren von Styrol und (Meth)acrylsäure, Copolymeren von Styrol und (Meth)acrylsäureester, Copolymeren von Styrol und (Meth)acrylamid, wobei die Copolymere silanisiert sein können, Homopolymeren und Copolymeren von Butadien wie Polybutadien und Polybutadien-Styrol, Vinylacetat-Polymeren wie dem Copolymer von (Meth)acrylsäure und Vinylacetat, aus mindestens einem Polyol und mindestens einem Polyisocyanat erhaltenen Polyurethanen und Mischungen, die einerseits mindestens ein aus mindestens einem Polyol und mindestens einem Polyisocyanat erhaltenes Polyurethan und andererseits mindestens einen durch Polykondensation zwischen mindestens einem Polyol und mindestens einer Polysäure erhaltenen Polyester umfassen, ausgewählt ist,
- mindestens ein Klebrigmacherharz,
- mindestens einen Verdicker,
- mindestens Polyvinylchlorid und/oder
- mindestens eine wässrige Dispersion von Siliciumdioxid-Nanoteilchen
umfasst.

7. Klebstoffzusammensetzung nach Anspruch 6, **dadurch gekennzeichnet, dass** es sich bei dem Metalloxid um ZnO handelt.

8. Klebstoffzusammensetzung nach einem der Ansprüche 1 bis 7, **dadurch gekennzeichnet, dass** sie eine bei 23°C gemessene Viskosität im Bereich von 30.000 bis 120.000 mPa.s aufweist.

9. Mehrschichtstruktur, umfassend mindestens zwei gleiche oder verschiedene Materialschichten, die mit einer Schicht der Klebstoffzusammensetzung nach einem der Ansprüche 1 bis 8 miteinander verbunden sind.

10. Verwendung der Klebstoffzusammensetzung nach einem der Ansprüche 1 bis 8 als Kontaktklebstoff.

## Claims

1. Adhesive composition comprising:
A) from 5 to 40% by dry weight of a mixture of polychloroprenes dispersed in water, comprising:
A1) at least one polychloroprene having a hardness greater than or equal to 80 Shore A, and
A2) at least one polychloroprene having a hardness less than or equal to 60 Shore A,
B) from 0.5 to 25% by dry weight of at least one self-crosslinkable agent of alkyd type,
C) from 10 to 40% by dry weight of at least one mineral filler,
D) from 0.05 to 3% by dry weight of at least one emulsifier,
E) water.

2. Adhesive composition according to Claim 1, **characterized in that** the mixture of polychloroprenes A) comprises:
A1) at least one polychloroprene in aqueous dispersion having a hardness greater than or equal to 85 Shore A, and/or
A2) at least one polychloroprene in aqueous dispersion having a hardness less than or equal to 55 Shore A.

3. Adhesive composition according to either one of Claims 1 and 2, **characterized in that** the self-crosslinkable agent of alkyd type consists:
(i) of at least one alkyd resin comprising at least one 5-membered cyclocarbonate function (Y) and
(ii) of at least one alkyd resin comprising at least one primary amine function (X) salified by an acid having a pKa ranging from 1 to 14, having a carbon-based chain comprising from 1 to 6 carbon atoms.

4. Adhesive composition according to any one of Claims 1 to 3, **characterized in that** the mineral filler is chosen from calcium carbonate, silica, a composite based on silica and kaolinite, sepiolite, and the mixture thereof.

5. Adhesive composition according to any one of Claims 1 to 4, **characterized in that** the emulsifier is a system of at least two emulsifiers chosen from the following emulsifiers:
- oxyethylenated unsaturated acyclic fatty alcohols having an HLB ranging from 15 to 18,
- oxyethylenated unsaturated cyclic fatty alcohols having a cloud point ranging from 63 to 67°C,
- mixtures of mono- and dialkylphenoxybenzenedisulfonate salts, the linear or branched alkyl portion of which comprises from 10 to 14 carbon atoms,
- oxyethylenated sulfosuccinic acid and alcohol hemiester salts comprising from 10 to 14 carbon atoms,
- oxyethylenated alkyl ether sulfate salts, the linear or branched alkyl portion of which comprises from 12 to 14 carbon atoms,
- polyvinyl alcohols.

6. Adhesive composition according to any one of Claims 1 to 5, **characterized in that** it comprises:
- at least one metal oxide,
- at least one adhesion agent chosen from copolymers of styrene and (meth)acrylic acid, copolymers of styrene and (meth)acrylic acid ester, copolymers of styrene and (meth)acrylamide, said copolymers possibly being silanized, homopolymers and copolymers of butadiene such as polybutadiene and polybutadiene-styrene, vinyl acetate polymers, such as the copolymer of (meth)acrylic acid and vinyl acetate, polyurethanes obtained from at least one polyol and at least one polyisocyanate, and mixtures comprising on the one hand at least one polyurethane obtained from at least one polyol and at least one polyisocyanate and on the other hand at least one polyester obtained by polycondensation between at least one polyol and at least one polyacid,
- at least one tackifying resin,
- at least one thickener,
- at least one polyvinyl chloride, and/or
- at least one aqueous dispersion of silica nanoparticles.

7. Adhesive composition according to Claim 6, **characterized in that** the metal oxide is ZnO.

8. Adhesive composition according to any one of Claims 1 to 7, **characterized in that** it has a viscosity ranging from 30 000 to 120 000 mPa.s, measured at 23°C.

9. Multilayer structure comprising at least two identical or different layers of material bonded to one another by a layer of adhesive composition as defined in any one of Claims 1 to 8.

10. Use of the adhesive composition as defined in any one of Claims 1 to 8 as contact adhesive.
